# FASCICULE DE BREVET EUROPEEN

(11) **EP 2 337 238 B1**
(45) Date de publication et mention de la délivrance du brevet: **22.08.2012**
(21) Numéro de dépôt: 10194974.1
(22) Date de dépôt: 14.12.2010
(51) Int. Cl.: H04B 7/185, H04B 7/204

(54) **SYSTÈME D'ÉMISSION ET DE RÉCEPTION MULTI-SPOTS À BORD D'UN SATELLITE**
SENDE- UND EMPFANGSSYSTEM MIT MEHREREN FUNKSTRAHLEN AN BORD EINES SATELLITEN
TRANSMISSION AND RECEPTION SYSTEM WITH MULTI-BEAMS ON-BOARD A SATELLITE

(30) Priorité: 18.12.2009 FR 0906178
(43) Date de publication de la demande: 22.06.2011
(73) Titulaire: Thales, 92200 Neuilly Sur Seine (FR)
(72) Inventeur: Voisin, Philippe, 31100, Toulouse (FR); Leboulc'h, Didier, 31780, Castelginest (FR); Trancart, Bruno, 31120, Portet/Sur/Garonne (FR)
(74) Mandataire: Nguyen, Dominique

(56) Documents cités:
- WO-A2-98/05132
- GB-A- 2 326 979
- LE PERA A ET AL: "Digital Transparent Processor for Satellite Telecommunication Services", AEROSPACE CONFERENCE, 2007 IEEE, IEEE, PISCATAWAY, NJ, USA, 3 March 2007 (2007-03-03), pages 1-9, XP031260740, ISBN: 978-1-4244-0524-4

## Description

La présente invention concerne un système d'émission et de réception multi-spots à bord d'un satellite et un satellite comportant un tel système. Elle s'applique notamment au domaine des télécommunications par satellite et plus particulièrement aux applications de télévision haute définition et aux applications multimédia.

Pour les applications de télévision haute définition et les applications multimédia, les répéteurs montés à bord des satellites de communication connus comportent des systèmes d'émission et de réception multi-spots qui reposent sur des architectures transparentes offrant des liaisons montantes entre une ou plusieurs stations terrestres et le répéteur et des liaisons descendantes entre le répéteur et une pluralité d'utilisateurs. Les architectures actuelles ne permettent pas de réaliser des liaisons directes entre les utilisateurs, appelées liaisons inter-spots ou liaisons mesh et imposent une connectivité figée entre les spots des utilisateurs et les stations terrestres.

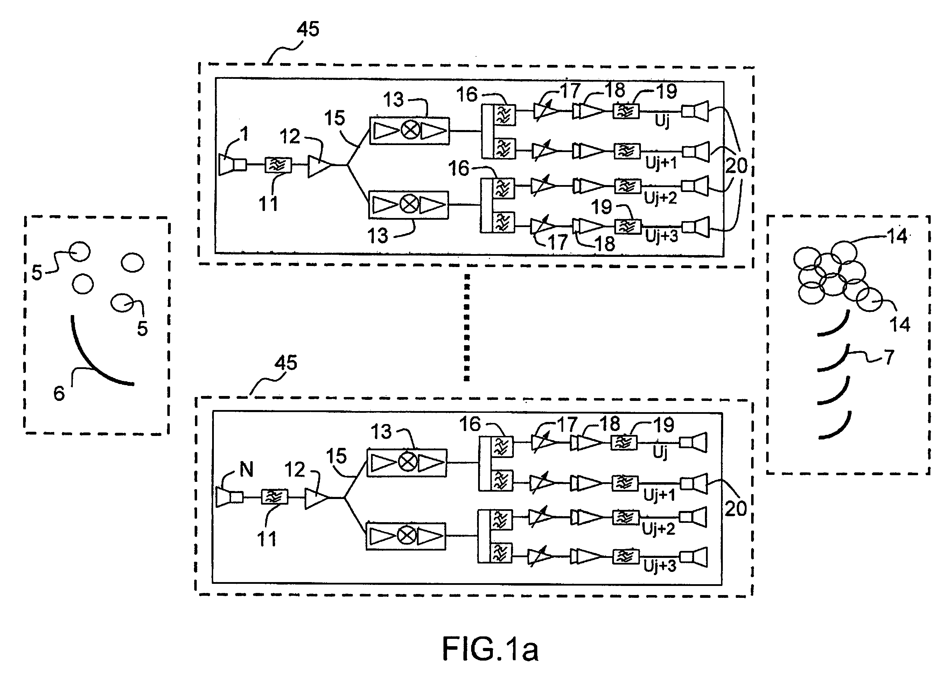

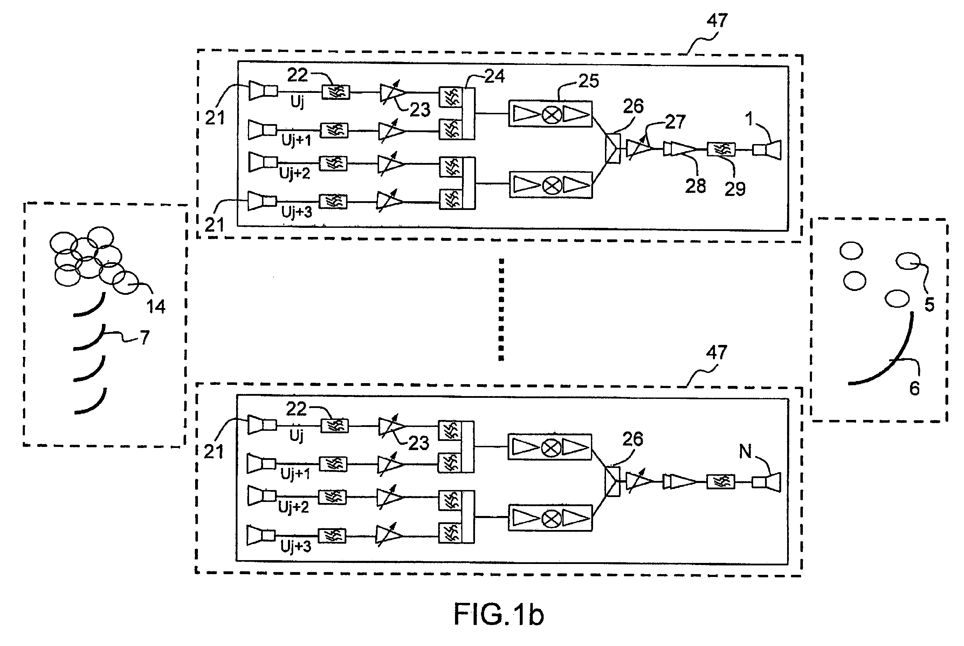

Les figures 1a et 1b montrent un exemple d'architecture d'un système d'émission et de réception d'un répéteur actuel offrant respectivement des liaisons montantes et des liaisons descendantes. Le système d'émission et de réception assurant les liaisons entre au moins une station terrestre, appelée en anglais Hub, et des utilisateurs comporte au moins une section aller 45 correspondant à la transmission des signaux émis par la station terrestre vers des utilisateurs et au moins une section retour 47 correspondant à la transmission des signaux émis par des utilisateurs vers la station terrestre. Le nombre de sections aller et de sections retour est égal au nombre de stations terrestres déployées.

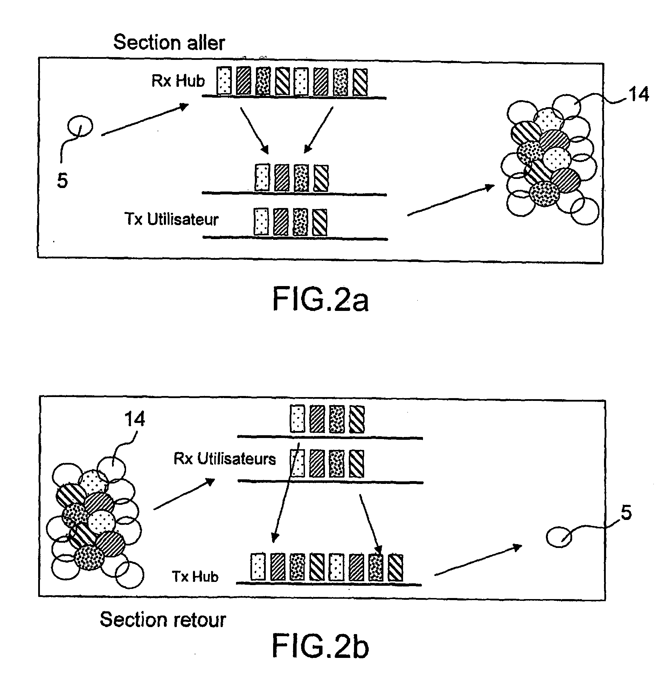

Chaque section aller (en anglais Forward ou Outbound), telle que représentée schématiquement sur l'exemple de la figure 1a, comporte généralement une antenne de réception 6 comportant une source de réception hub dédiée à la réception des signaux 5 provenant d'une seule station terrestre. Dans le cas où plusieurs stations terrestres sont déployées, l'antenne de réception 6 comporte plusieurs sources de réception hub 1 à N, N étant un nombre entier supérieur à 1, chaque source de réception hub étant dédiée à la réception des signaux provenant d'une seule station terrestre. Les signaux reçus par une source hub, par exemple par la source de réception hub 1 permettent de servir plusieurs spots utilisateurs 14, chaque spot utilisateur 14, appelé aussi faisceau, correspondant à la couverture d'une zone géographique terrestre prédéterminée. Les spots utilisateurs sont émis par une ou plusieurs antennes d'émission utilisateurs 7. Par exemple quatre antennes d'émission utilisateurs sont représentées sur la figure 1a. Les signaux radiofréquence émis par une station terrestre occupent généralement une large bande de fréquence. Ces signaux hub 5 sont reçus par une chaîne de transmission reliée par exemple à la source de réception hub 1 de l'antenne de réception hub 6. Les signaux à large bande reçus passent au travers d'un filtre 11 qui permet de filtrer la bande de fréquence de réception RX hub utile puis d'un amplificateur à faible bruit 12 et sont transposés en fréquence par un ou plusieurs convertisseurs de fréquence 13 pour passer de la bande de fréquence de réception RX hub vers la bande de fréquence d'émission TX utilisateurs. La bande de fréquence allouée aux spots utilisateurs 14 étant généralement plus étroite que celle allouée aux stations terrestres, l'utilisation de plusieurs convertisseurs de fréquence 13 permet en outre de replier la bande d'émission, c'est-à-dire de ramener à la même fréquence centrale d'émission des bandes de fréquence qui étaient disjointes à la réception. Ceci est généralement nécessaire pour occuper une bande de fréquence d'émission généralement plus étroite que la bande de réception. Il est ainsi possible d'occuper une bande d'émission deux fois moins large que la bande de réception, voire plus selon les besoins. Le nombre de convertisseurs utilisé est donc égal au ratio entre la largeur de la bande de réception RX hub et la largeur de la bande d'émission TX utilisateurs. Dans cet exemple, après amplification, un diviseur 15 réalise une division par deux de la puissance du signal et les deux signaux issus de la division sont transposés en fréquence par deux convertisseurs de fréquence 13 qui permettent, comme représenté sur la figure 2a, de scinder la bande de fréquence reçue en deux bandes qui seront, après conversion de fréquence 13, centrées sur la même fréquence et deux fois plus étroites que la bande de fréquence reçue. Les signaux dont les fréquences correspondent aux deux bandes de fréquence d'émission ainsi constituées sont ensuite transmis respectivement à deux démultiplexeurs d'entrée IMUX 16 (en anglais Input Multiplexer) qui les scindent en plusieurs sous-bandes contigües, chaque sous-bande étant de largeur fixe et pouvant être ajustée, par exemple au sol, en fonction des besoins en fréquences d'émission. Par ces étapes successives décrites ci-dessus, quatre sous-bandes d'émission indépendantes Uⱼ,..., Uⱼ₊₃, sont ainsi constituées à partir d'une seule réception large bande et sont représentées sur l'exemple de la figure 1 a. Chacune de ces sous-bandes d'émission est dédiée à l'émission de signaux radiofréquence vers un spot utilisateur 14 prédéterminé. Pour représenter les sous-bandes de fréquence d'émission transmises sur les spots utilisateurs 14, on attribue généralement un code de couleur à chaque sous-bande. Ce code de couleur définit les ressources utilisées. Chaque couleur correspond ainsi à une ressource fréquentielle définie par la fréquence centrale de la bande de fréquence du signal. Dans le cas de la figure 2a, huit sous-bandes de fréquence d'émission TX utilisateurs sont générées à partir de la réception d'une bande RX hub provenant d'un spot hub 5. Après transposition de fréquence 13, certaines sous-bandes se retrouvent à la même fréquence centrale et se voient attribuer la même couleur bien que chacune des sous-bandes soit destinée à des spots utilisateurs 14 différents. Dans cet exemple les huit sous-bandes de fréquence d'émission TX utilisateurs génèrent quatre couleurs différentes, chaque couleur étant donc utilisée deux fois. Chaque sous-bande de fréquence d'émission (ou couleur) est ensuite amplifiée par un préamplificateur 17 puis par un tube à ondes progressives 18 suivi d'un filtre 19 qui réalisent une amplification de puissance et un filtrage des non-linéarités pour que les sources utilisateurs 20 ne transmettent aux spots utilisateurs 14 que le spectre de fréquence utile.

Chaque section retour 47 (en anglais Return ou Inbound), telle que représentée schématiquement sur l'exemple de la figure 1b est inversée par rapport à la section aller et comporte des sources utilisateurs de réception 21 destinées chacune à recevoir des signaux radiofréquence dans une bande de fréquences de réception étroite et susceptible de transmettre les signaux reçus à une station de réception terrestre. Dans le cas de l'utilisation d'antennes fonctionnant à l'émission et à la réception, les sources utilisateurs de réception 21, sont les mêmes que les sources utilisateurs d'émission 20 de la section aller. Les sources utilisateurs de réception 21 sont reliées chacune respectivement, à un filtre 22 suivi d'un amplificateur à faible bruit à contrôle de gain 23 qui permet de contrôler les niveaux respectifs reçus sur chaque chaîne de réception utilisateur Uⱼ,..., Uⱼ₊₃ correspondant à chaque source 21. Après amplification, les signaux reçus dans les sous-bandes de fréquences contigües Uⱼ,..., Uⱼ₊₃ sont recombinés par des multiplexeurs d'entrée IMUX 24 pour reconstruire un spectre de fréquences à bande plus large, puis transposés dans la bande de fréquences d'émission TX par un ou plusieurs convertisseurs de fréquence 25. Les signaux issus des convertisseurs de fréquence 25 sont recombinés par un combineur de signaux 26 pour reconstituer la bande totale allouée à la station terrestre, comme représenté sur la figure 2b, et transmettre, après amplification dans les amplificateurs de canaux 27 et de puissance 28 et après filtrage 29, les différents signaux issus des antennes utilisateurs 7 vers la station terrestre par une source d'émission hub dédiée de l'antenne hub 6, les sources d'émission hub pouvant être les mêmes que les sources de réception hub 1 à N dans le cas de l'utilisation d'antennes d'émission et de réception.

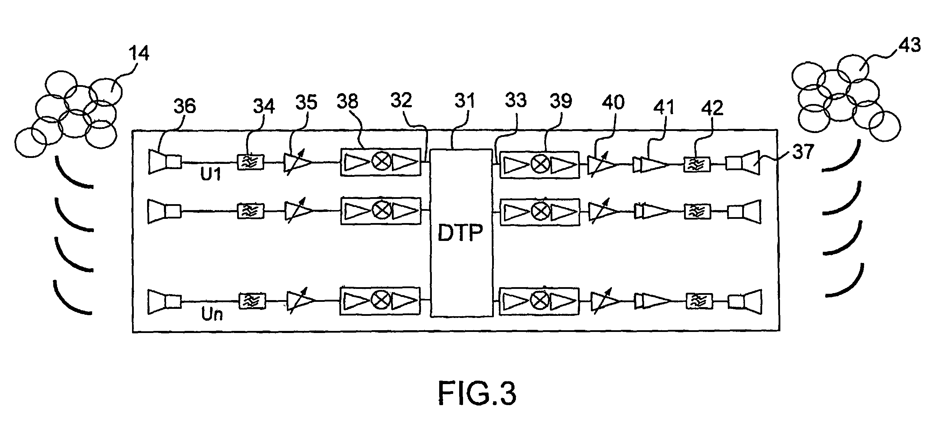

Ce type d'architecture ne permet d'assurer que des liaisons montantes et descendantes entre des stations terrestres et des spots utilisateurs et ne permet pas de réaliser des liaisons inter-spots directes entre des utilisateurs. Pour réaliser des liaisons inter-spots, il est connu, comme représenté sur l'exemple d'architecture de la figure 3, d'équiper le répéteur par une section de liaison additionnelle, appelée section mesh, destinée à assurer uniquement des liaisons inter-spots, la section mesh comportant un processeur transparent numérique DTP 31 (en anglais : Digital Transparent Processor). Le DTP 31 comporte des accès d'entrée 32 dédiés chacun à la réception des signaux provenant d'un premier spot utilisateur 14 et des accès de sortie 33 dédiés chacun à la réémission des signaux reçus vers un deuxième spot utilisateur destinataire 43. Chaque accès d'entrée 32 du DTP 31 est connecté à une source de réception 36 de signaux par l'intermédiaire d'une chaîne de conversion de fréquence de réception dédiée et chaque accès de sortie du DTP 33 est relié à une source d'émission 37 de signaux radiofréquence par l'intermédiaire d'une chaîne de conversion de fréquence d'émission dédiée. Dans chaque chaîne de conversion en fréquence de réception, les signaux reçus par chaque source de réception 36 sont préalablement filtrés par un filtre 34 et amplifiés dans un amplificateur à faible bruit 35 puis convertis en fréquence dans un convertisseur 38. Le DTP 31 réalise un filtrage numérique fin permettant de diviser les bandes de fréquence des signaux reçus provenant de chaque spot utilisateur en plusieurs sous-bandes de largeurs plus fines, chaque sous-bande issue de la division étant dédiée à un seul utilisateur, et réalise un routage de chaque sous-bande puis une réorganisation desdites sous-bandes de façon à reconstituer les bandes dédiées à chaque spot utilisateur destinataire 43, les bandes réorganisées étant respectivement délivrées sur les accès de sortie 33 du DTP et transmises sur les chaînes de conversion de fréquence d'émission correspondantes. Après conversion de fréquence 39 puis amplification 40, 41 et filtrage 42, les sources d'émission 37 reliées à chaque chaîne de conversion de fréquence d'émission réémettent les signaux vers les spots utilisateurs destinataires 43.

Cependant les capacités de traitement d'un DTP 31 sont limitées en terme de bande passante pouvant être traitée par accès ainsi qu'en capacité de traitement totale correspondant au produit de la capacité par accès par le nombre d'accès 32, 33 du DTP. Ces limitations ne permettent pas de traiter un grand nombre de connexions entre les spots 36 à réémettre et les spots destinataires 43. Actuellement la capacité de traitement d'un DTP est de l'ordre de 2000MHz, la capacité par accès est de 250MHz et le nombre d'accès du DTP est limité à huit spots utilisateurs au total alors que les besoins typiques de services pour une charge utile sont de quatre-vingt spots utilisateurs. Pour augmenter la capacité de traitement du DTP 31, il est possible de limiter la bande de fréquences de chaque accès, par exemple à 50MHz, mais cela multiplie le nombre de chaînes de conversion de fréquence de part et d'autre du DTP 31. Par exemple, dans le cas de 80 spots utilisateurs, 160 chaînes de conversion de fréquence sont nécessaires, ce qui complexifie l'architecture autour du DTP 31, le nombre de chaînes de conversion de part et d'autre du DTP et le DTP lui-même.

Le document WO 98/05132 A2 [ERICSSON GE MOBILE INC, 1998-02-05] divulgue un système d'émission et de réception multi-spots à bord d'un satellite comportant au moins une section aller, au moins une section retour, et une section de liaison additionnelle, appelée section mesh, destinée à assurer des liaisons inter-spots.

Le document "Digital Transparent Processor for Satellite Telecommunication Services" [A. Le Pera, F. Forni, M. Grossi, M. Lucente, V. Palma, T. Rossi et M. Ruggiero; AEROSPACE CONFERENCE, 2007 IEEE, PISCATAWAY, NJ, USA, 2007-03-03, pages 1-9, XP031260740, ISBN: 978-1-4244-0524-4] divulgue un satellite avec une section mesh comportant un processeur transparent numérique.

Un premier but de l'invention est de réaliser une nouvelle architecture de répéteur à bord d'un satellite ne comportant pas les inconvénients des architectures existantes, permettant de réaliser des liaisons montantes et descendantes entre une ou plusieurs stations terrestres et des spots utilisateurs et permettant de réaliser un grand nombre de liaisons inter-spots directes entre les utilisateurs en utilisant un DTP de taille et de masse réduite, à complexité minimisée, ayant un nombre d'accès d'entrée et de sortie très inférieur au nombre de connexions inter-spots utilisateurs à réaliser et permettant de minimiser le nombre de chaînes de conversion en amont et en aval du DTP.

Un deuxième but de l'invention est de réaliser une nouvelle architecture de répéteur permettant de servir un ensemble de spots utilisateurs même dans le cas où le nombre de stations au sol est insuffisant.

Pour cela, l'invention concerne un système d'émission et de réception multi-spots à bord d'un satellite comportant au moins une section aller comportant une chaîne de réception hub destinée à recevoir des premiers signaux provenant d'une station terrestre et au moins deux chaînes d'émission utilisateurs destinés à émettre les premiers signaux vers des zones de couverture géographiques correspondant à des utilisateurs, appelées spots utilisateurs, au moins une section retour comportant au moins deux chaînes de réception utilisateurs destinées à recevoir des seconds signaux provenant des spots utilisateurs et une chaîne d'émission hub destinée à émettre des seconds signaux vers la station terrestre, et une section de liaison additionnelle, appelée section mesh, destinée à assurer des liaisons inter-spots, la section mesh comportant un processeur transparent numérique DTP destiné à filtrer et router des signaux d'un premier spot utilisateur vers un second spot utilisateur.

Selon l'invention, la section mesh comporte en outre :
- des moyens de prélèvement et de recombinaison de fréquence comportant au moins deux entrées reliées à la section retour et une sortie reliée à une entrée du DTP, pour prélever, respectivement, sur les au moins deux chaînes de réception utilisateurs, deux premières fractions de bandes de fréquence, appelées fractions de bande mesh et pour recombiner les deux premières fractions de bande mesh prélevées en une seule bande de fréquence appliquée sur une entrée du DTP,
- des moyens de division et de réinjection de fréquence comportant une entrée reliée à une sortie du DTP et au moins deux sorties reliées à une section aller, pour diviser la bande de fréquence routée sur une même sortie du DTP en au moins deux secondes fractions de bande de fréquence et pour réinjecter, respectivement sur les au moins deux chaînes d'émission utilisateurs, les secondes fractions de bande de fréquences obtenues après division.

Avantageusement, les moyens de prélèvement et de recombinaison de fréquence comportent un multiplexeur d'entrée IMUX et les moyens de division et de réinjection de fréquence comportent au moins un démultiplexeur de sortie.

Le système d'émission et de réception multi-spots selon l'invention peut comporter d'autres caractéristiques complémentaires qui peuvent être prises séparément et/ou en combinaison, et notamment :
- la fraction de bande mesh prélevée sur une chaîne de réception utilisateur d'un spot utilisateur est avantageusement identique à la fraction de bande de fréquence réinjectée sur une chaîne de fréquence d'émission utilisateur du même spot utilisateur.
- les fractions de bande mesh prélevées sur les chaînes de réception utilisateur d'une même section retour ont avantageusement toutes une même largeur et sont décalées en fréquence les unes par rapport aux autres, le décalage en fréquence étant égal à la largeur d'une fraction de bande mesh et les fractions de bande mesh prélevées sont contigües.
- la largeur totale des fractions de bande mesh prélevées sur les chaînes de réception utilisateur de la même section retour (47) est avantageusement égale à la largeur de bande de chaque spot utilisateur.
- le système d'émission et de réception multi-spots peut comporter en outre des premiers moyens de sélectivité pour connecter sélectivement au moins un accès d'entrée du DTP soit sur des chaînes de réception utilisateurs soit, par l'intermédiaire d'au moins une première liaison additionnelle, à une chaîne de réception hub, et des seconds moyens de sélectivité pour connecter sélectivement au moins un accès de sortie du DTP soit sur des chaînes d'émission utilisateurs, soit, par l'intermédiaire d'au moins une seconde liaison additionnelle, sur une chaîne d'émission hub.
- les premiers moyens de sélectivité peuvent comporter une première matrice de sélectivité d'entrée connectée dans la section mesh entre les IMUX et les entrées du DTP et une deuxième matrice de sélectivité de sortie connectée dans la section mesh entre les sorties du DTP et les DMUX.
- les deuxièmes moyens de sélectivité peuvent comporter une troisième matrice de sélectivité connectée sur les chaînes de réception utilisateur de chaque section retour et reliée à la deuxième matrice de sélectivité de sortie de la section mesh.
- les première, deuxième et troisième matrices de sélectivité réalisent des fonctions de type « ou exclusif ».

L'invention concerne également un satellite de télécommunication comportant un tel système d'émission et de réception multi-spots.

D'autres particularités et avantages de l'invention apparaîtront clairement dans la suite de la description donnée à titre d'exemple purement illustratif et non limitatif, en référence aux dessins schématiques annexés qui représentent :
- figures 1 a et 1 b : un exemple d'architecture de charge utile respectivement pour des liaisons montantes et pour des liaisons descendantes, selon l'art antérieur ;
- figure 2a : un exemple illustrant la scission d'une bande de fréquences initiale en deux bandes de fréquences identiques et deux fois plus étroites que la bande de fréquences initiale ;
- figure 2b : un exemple illustrant la combinaison de deux bandes de fréquences étroites en une bande de fréquences deux fois plus large ;
- figure 3 : un exemple d'architecture de charge utile utilisant un DTP et permettant d'assurer des liaisons inter-spots entre utilisateurs, selon l'art antérieur;
- figure 4 : un premier exemple d'architecture de charge utile utilisant un DTP et permettant d'assurer des liaisons inter-spots entre utilisateurs, selon l'invention ;
- figure 5 : un schéma illustrant le principe de prélèvement d'une sous-bande de fréquence correspondant à une fraction de la bande totale allouée à un spot, pour cinq spots différents reçus utilisant la même bande de fréquence, selon l'invention ;
- figure 6 : une vue simplifiée, correspondant à l'architecture de la figure 4, montrant une seule connexion entre un accès de sortie du DTP et une chaîne d'émission utilisateur d'une section aller desservant un spot utilisateur, selon l'invention ;
- figure 7 : un schéma d'une variante de réalisation d'une architecture de charge utile permettant de servir un ensemble de spots utilisateurs dans le cas où le nombre de stations au sol est insuffisant.

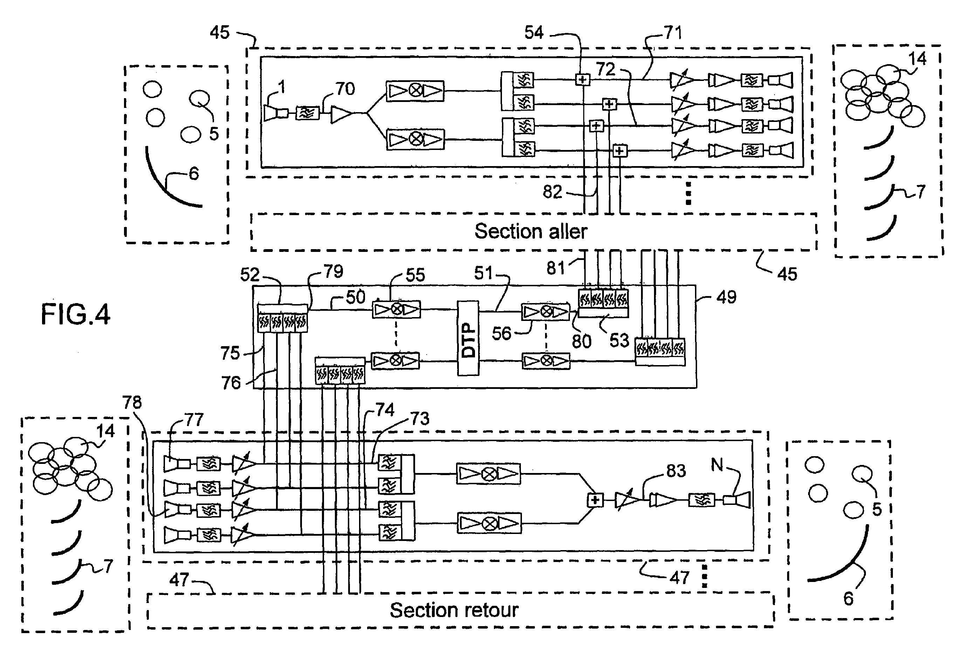

L'architecture de charge utile représentée sur la figure 4 comporte au moins une section aller 45 comportant une chaîne de réception hub 70 pour recevoir des signaux 5 provenant d'une station terrestre non représentée et assurer l'acheminement de ces signaux 5 vers des spots utilisateurs 14 par l'intermédiaire d'au moins deux chaînes d'émission utilisateurs 71, 72, au moins une section retour 47 comportant au moins deux chaînes de réception utilisateurs 73, 74 pour recevoir des signaux provenant des spots utilisateurs 14 et assurer l'acheminement des signaux reçus vers une station terrestre par l'intermédiaire d'une chaîne d'émission hub 83 et une section mesh 49 assurant des liaisons inter-spots directes entre les utilisateurs. Le nombre de sections aller est égal au nombre de sections retour.

La transmission des communications entre une ou plusieurs stations terrestres et une pluralité de spots utilisateurs 14 est réalisée par l'intermédiaire d'antennes d'émission et de réception 7 dédiés aux spots utilisateurs 14 et d'au moins une antenne d'émission et de réception hub 6 comportant des sources d'émission et de réception hub 1 à N, chaque source hub étant dédiée à une station terrestre. La bande passante allouée aux stations terrestres est plusieurs fois supérieure à la bande passante allouée aux spots utilisateurs 14.

La section mesh 49 comporte un processeur transparent numérique DTP 35 comportant au moins une entrée et une sortie, au moins une chaîne de conversion d'entrée 50 reliée à une entrée du DTP 35 et au moins une chaîne de conversion de sortie 51 reliée à une sortie du DTP 35, les chaînes de conversion d'entrée et de sortie comportant des moyens de conversion de la fréquence 55, 56 des signaux pour permettre leur traitement par le DTP 35. Selon l'invention, la chaîne de conversion d'entrée 50 comporte, en outre, des moyens 52 de prélèvement et de recombinaison de fréquence comportant au moins deux entrées 75, 76 connectées respectivement aux deux chaînes de réception utilisateurs 73, 74 associées aux deux sources de réception utilisateurs 77, 78 différentes de la section retour 47 et une sortie 79 reliée à une entrée du DTP 35 par l'intermédiaire des moyens de conversion en fréquence 55. La chaîne de conversion de sortie 51 comporte en outre des moyens 53 de division et de réinjection de fréquence comportant une entrée 80 connectée à une sortie du DTP 35 par l'intermédiaire des moyens de conversion en fréquence 56 et au moins deux sorties 81, 82, les deux sorties 81, 82 étant respectivement connectées, par l'intermédiaire de moyens de combinaison 54, aux deux chaînes d'émission utilisateurs 71, 72 de la section aller 45 pour assurer l'émission du signal combiné vers un spot utilisateur 14.

Les moyens 52 de prélèvement et de recombinaison de fréquence comportent des moyens de filtrage pour prélever, sur chacune desdites chaînes de réception utilisateurs 73, 74, une sous-bande de fréquence, appelée fraction de bande mesh 100, correspondant à une fraction de la bande totale allouée à chaque spot utilisateur 14, et des moyens pour recombiner l'ensemble des fractions de bande mesh 100 prélevées en une bande mesh de largeur identique à celle allouée aux spots utilisateurs. Les sources 77, 78 fonctionnent dans une même bande de fréquence ou dans deux bandes de fréquence différentes mais contigües et les fractions de bandes mesh prélevées sont contigües.

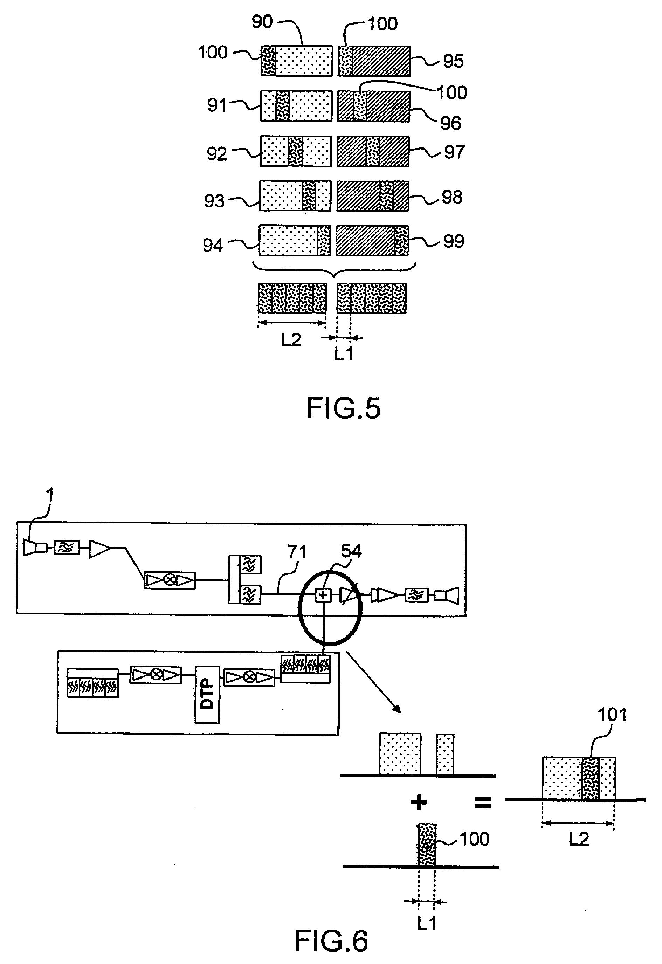

Comme représenté sur la figure 5 dans le cas d'un exemple de réception de dix spots différents 90 à 99 utilisant deux bandes de fréquence différentes mais contigües, les fractions de bande mesh 100 prélevées sur chacun des spots reçus sont de largeurs identiques et décalées en fréquence les unes par rapport aux autres, le décalage correspondant à la largeur L1 de chaque fraction de bande mesh de façon que les fractions de bande mesh 100 ne comportent pas de fréquence en commun, soient contigües et que la largeur totale de l'ensemble des fractions de bande mesh 100 après recombinaison soit égale à la largeur de bande L2 attribuée à un spot utilisateur 14. Le décalage en fréquence des sous-bandes prélevées et allouées à la section mesh permet de séparer différents spots reçus de même couleur, c'est-à-dire utilisant la même bande de fréquence. Dans l'exemple de la figure 5, il y a réception de dix spots utilisateurs utilisant deux bandes de fréquence différentes, chaque bande de fréquence utilisateur étant utilisée par cinq spots utilisateurs différents. La séparation des différents spots est réalisée en prélevant, dans chacune de ces bandes utilisateur, une fraction de bande mesh égale à un cinquième de la bande de fréquence utilisateur, les fractions mesh prélevées d'une bande utilisateur à une autre bande utilisateur étant disjointes et contigües. Après conversion en fréquence, les fractions de bande mesh contigües prélevées et recombinées en une bande unique de même largeur L2 que chaque bande utilisateur, forment un signal recombiné unique appliqué sur un même accès d'entrée du DTP 35. Avantageusement, les moyens 52 de prélèvement et de recombinaison peuvent être des multiplexeurs d'entrée appelés aussi IMUX (en anglais : Input Multiplexor).

Dans le DTP 35, les signaux appliqués en entrée sont filtrés et routés de manière classique vers une sortie du DTP 35.

Les moyens 53 de division et de réinjection de fréquence comportent des moyens de filtrage pour diviser la bande de fréquence routée par le DTP 35 sur un même accès de sortie, en au moins deux fractions de bande de fréquence contigües de même largeur et des moyens de réinjection pour réinjecter sur chacune des deux chaînes d'émission utilisateur 71, 72 de la section aller 45, les fractions de bandes de fréquence obtenues après filtrage. Les fractions de bande de fréquence filtrées et réinjectées correspondent aux fractions de bande mesh prélevées dans les deux chaînes de réception utilisateur 73, 74 de la section retour 47 et ont la même largeur de bande L1.

La figure 6 est une vue simplifiée de l'architecture de la figure 4 montrant le principe de réinjection de la fraction de bande manquante dans une chaîne d'émission utilisateur 71 d'une section aller desservant un spot utilisateur 14, la réinjection de la fraction de bande manquante permettant de reconstituer la bande totale allouée au spot utilisateur 14 correspondant. Pour chacune des chaînes d'émission 71, 72 et de réception 73, 74, la fraction de bande de fréquence mesh 100 prélevée sur la chaîne de réception 73 d'un spot utilisateur 14 est identique à la fraction de bande de fréquence 101 réinjectée sur la chaîne d'émission 71 du même spot utilisateur 14. Ainsi, chaque fraction de bande de fréquence mesh 100 prélevée à la réception est réinjectée 101 à l'émission. Chaque signal issu d'un spot utilisateur est transmis, par l'intermédiaire du DTP, à un autre utilisateur en utilisant la sous-bande de fréquence correspondant à la fraction de bande de fréquence mesh 100 prélevée. La fraction de bande prélevée 100 est réinjectée 101 dans une chaîne d'émission 71 de la section aller et combinée, par l'intermédiaire des moyens de combinaisons 54, à la bande d'émission de la section aller pour former un signal unique dont la largeur de bande de fréquence est égale à la largeur de bande de fréquence L2 allouée à chaque spot utilisateur 14. Avantageusement, les moyens 53 de séparation et de réinjection de fréquence peuvent être des démultiplexeurs de sortie appelés aussi DMUX (en anglais : Demultiplexor).

Cette architecture de charge utile permet de servir au moins deux spots utilisateurs à partir d'un seul accès d'entrée et de sortie du DTP 35.

Sur la figure 4, la section retour comporte quatre chaînes de réception utilisateur 73, 74 de signaux radiofréquence et la section aller comporte quatre chaînes d'émission utilisateur 71, 72 de signaux radiofréquence. La section mesh 49 assurant des liaisons inter-spots entre des utilisateurs 14, comporte un DTP 35 comportant plusieurs accès d'entrée et de sortie, chaque accès d'entrée étant relié à une section retour 47 et chaque accès de sortie étant relié à une section aller 45. Les moyens de prélèvement et de recombinaison de fréquence de chaque section retour 47 comporte un multiplexeur d'entrée 52 ayant quatre entrées connectées respectivement sur les quatre chaînes de réception utilisateur 73, 74 et une sortie connectée sur un accès d'entrée du DTP 35. Le multiplexeur 52 comporte quatre voies de filtrage pour prélever et filtrer une fraction de la bande de fréquence mesh de chacune des chaînes de réception utilisateur 73, 74, les quatre fractions de bandes de fréquence mesh prélevées et filtrées étant contigües et de largeurs L1 identiques, chaque largeur L1 étant égale à un quart de la largeur L2 de la bande totale allouée à un spot utilisateurs 14. Les moyens 53 de séparation et de réinjection de fréquence de chaque section aller 45 comportent un démultiplexeur de sortie 53 ayant une entrée connectée à un accès de sortie du DTP 35 et quatre sorties connectées respectivement, par l'intermédiaire de combineurs 54 respectifs, sur les quatre chaînes d'émission 71, 72 des spots utilisateurs 14. Le démultiplexeur 53 comporte quatre voies de filtrage pour diviser et filtrer quatre fractions de bandes de fréquence identiques aux fractions de bandes mesh prélevées sur les chaînes de réception 73, 74 de la section retour 47, les quatre fractions de bandes de fréquence divisées et filtrées étant contigües et de largeurs identiques, chaque largeur étant égale à un quart de la largeur L2 de la bande totale allouée à un spot utilisateurs 14.

Ainsi pour un DTP comportant N accès d'entrée et N accès de sortie et en utilisant des IMUX comportant P entrées et des DMUX comportant p sorties, N étant un nombre entier supérieur ou égal à un et P étant un nombre entier supérieur ou égal à 2, l'architecture selon l'invention permet de connecter directement un nombre de spots utilisateurs égal à (N.P) spots.

A titre d'exemple non limitatif, pour une bande de fréquence de 2000MHz allouée à chaque station terrestre, soit de 1000MHz pour deux polarisations différentes et pour une bande de fréquence de 500MHz allouée à chaque spot utilisateur, soit 250MHz aller et retour par spot, il faut 10 stations terrestres pour servir 80 spots utilisateurs, soit une capacité totale de 20000MHz aller et 20000MHz retour. Avec un DTP comportant 8 entrées et 8 sorties de 500MHz par accès connecté à des IMUX et des DMUX de 10 canaux de 50MHz de bande chacun, 10 spots peuvent être connectés par accès, soit 80 spots au total à l'émission et 80 spots à la réception pour les liaisons inter-spots, ce qui représente une bande de 4000MHz aller et 4000MHz retour allouée aux liaisons inter-spots, soit 20% de la capacité totale allouée aux spots.

Cette architecture de charge utile est performante pour servir un grand nombre de liaisons inter-spots, mais elle ne permet pas une flexibilité de liaisons entre les stations terrestres et les spots utilisateurs pour les liaisons aller et retour. En effet, une station terrestre sert un nombre de spots utilisateurs prédéterminé et fixe. Dans le cas où il est souhaité servir un grand nombre de spots, il est alors nécessaire de disposer d'un déploiement de plusieurs stations terrestres, pour permettre toutes les liaisons souhaitées. Dans l'exemple décrit ci-dessus, dix stations terrestres sont nécessaires pour assurer les liaisons avec les 80 spots utilisateurs.

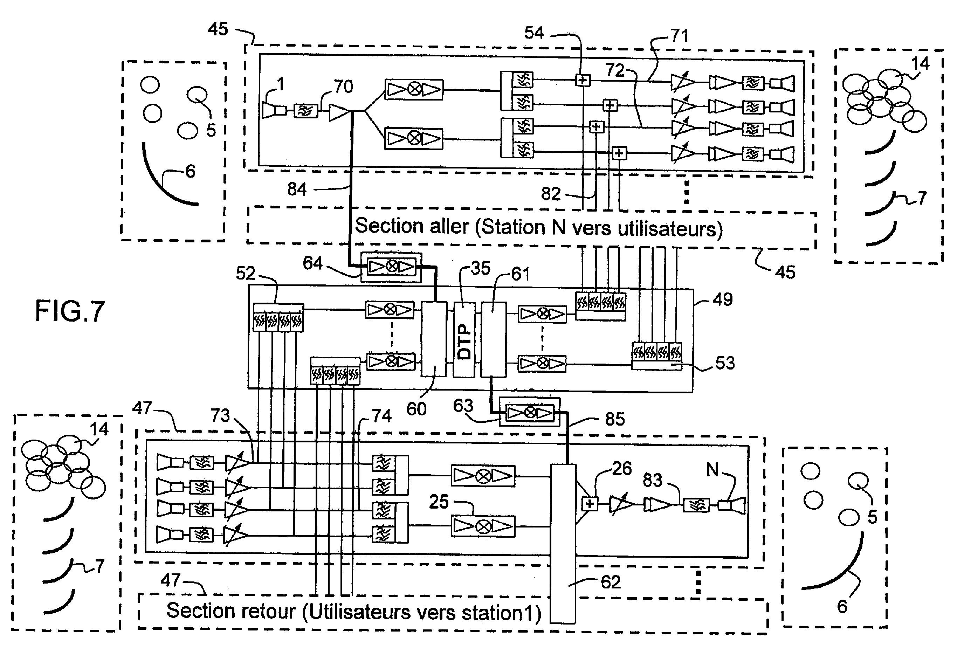

La figure 7 représente une variante de réalisation d'une architecture de charge utile permettant de servir l'ensemble des spots souhaités même dans le cas où le nombre de stations terrestres est insuffisant. Pour cela, selon cette variante de réalisation, pour réaliser des liaisons aller entre une station terrestre et des utilisateurs additionnels, l'architecture de charge utile comporte en outre des premiers moyens de sélectivité 60, 61 pour connecter sélectivement au moins un accès d'entrée du DTP 35 soit sur des chaînes de d'émission utilisateur 71, 72 d'une section aller 45 pour réaliser une liaison inter-spots comme décrit en référence à la figure 4, soit à une chaîne de réception hub 70 pour réaliser une liaison additionnelle 84 entre la station terrestre et les utilisateurs additionnels par l'intermédiaire du DTP 35. Symétriquement, pour réaliser des liaisons retour des utilisateurs additionnels vers la station terrestre, l'architecture de charge utile comporte des seconds moyens de sélectivité 62 pour connecter sélectivement au moins un accès de sortie du DTP 35 soit sur des chaînes de réception utilisateur 73, 74 d'une section retour 47 pour réaliser une liaison inter-spots, soit sur une chaîne d'émission hub 83 pour réaliser une liaison additionnelle 85 avec une source d'émission hub N la station terrestre par l'intermédiaire du DTP 35.

Les premiers moyens de sélectivité comportent une première matrice de sélectivité 60 d'entrée connectée dans la section mesh entre les IMUX 52 et les entrées du DTP 35 et une deuxième matrice de sélectivité 61 de sortie connectée dans la section mesh 49 entre les sorties du DTP 35 et les DMUX 53. La première matrice de sélectivité 60 est reliée à chaîne de réception utilisateur d'une section aller par l'intermédiaire d'un convertisseur de fréquence 64. Les deuxièmes moyens de sélectivité comportent une troisième matrice de sélectivité 62 connectée aux chaînes d'émission utilisateur de chaque section retour 47, entre les convertisseurs de fréquence 25 et les combineurs de signaux 26 et reliée à la deuxième matrice de sélectivité 61 de sortie de la section mesh 49 par l'intermédiaire d'un convertisseur de fréquence 63. Les première, deuxième et troisième matrices de sélectivité réalisent des fonctions de type « ou exclusif ».

Ainsi, pour réaliser une liaison aller entre une station terrestre et un utilisateur additionnel situé dans une zone géographique non couverte par les chaînes d'émission utilisateur fixes de la section aller dédiée à la station terrestre, les signaux émis par la station terrestre et reçus par la source de réception hub de la section aller sont dirigés vers la première matrice de sélectivité 60 de la section mesh 49 puis routés par le DTP 35 sur un accès de sortie du DTP 35 et dirigés, par l'intermédiaire de la seconde matrice de sélectivité 61, vers une chaîne d'émission utilisateur couvrant la zone géographique où est localisé l'utilisateur additionnel. Avantageusement, la chaîne d'émission utilisateur couvrant la zone géographique où est localisé l'utilisateur additionnel peut faire partie d'une section aller en attente de raccordement à une future station terrestre dédiée.

Symétriquement, pour réaliser une liaison retour entre un utilisateur additionnel et une station terrestre, l'utilisateur additionnel étant localisé dans une zone géographique non couverte par les chaînes de réception utilisateur fixes de la section retour dédiée à la station terrestre, les signaux émis par l'utilisateur additionnel et reçus par une chaîne de réception utilisateur couvrant la zone géographique où est localisé l'utilisateur additionnel sont acheminés dans la section mesh 49 vers une entrée du DTP 35. Le DTP 35 route les signaux reçus vers un accès de sortie du DTP 35 et les transmet, par l'intermédiaire de la seconde matrice de sélectivité 62, à la troisième matrice de sélectivité 63 qui les dirige ensuite vers la chaîne d'émission hub de la section retour 47 dédiée à la station terrestre.

Cette variante d'architecture de charge utile permet de servir un nombre élevé de spots utilisateurs à partir d'une seule station terrestre et de façon flexible. Cette architecture permet aussi de réaliser un déploiement progressif d'un service vers un grand nombre d'utilisateurs par des liaisons provisoires passant au travers du DTP qui peut être utilisé, au début du déploiement, pour moitié pour réaliser des liaisons aller et pour moitié pour réaliser des liaisons retour. Au fur et à mesure de la construction des stations terrestres, le trafic des communications qui passait par l'intermédiaire du DTP peut être basculé vers les sections aller et retour dédiées aux stations terrestres construites et remplacé par un service mesh de liaisons inter-spots entre les utilisateurs. A la fin du déploiement des stations terrestres, tout le trafic des communications entre des stations terrestres et les spots utilisateurs passe par les sections aller et retour dédiées à chaque station terrestre et le DTP est alors complètement utilisé pour assurer les liaisons inter-spots entre les utilisateurs.
à titre d'exemple non limitatif, pour une station terrestre présentant une bande de fréquence de 1000MHz par polarisation et fonctionnant dans deux polarisations différentes, en utilisant un DTP ayant une capacité de traitement de 500MHz par accès et comportant 8 accès d'entrée et 8 accès de sortie, et en utilisant des IMUX et des DMUX présentant 10 canaux de 50MHz chacun pour la connexion de 10 spots par accès, il est possible de connecter 4 accès d'entrée du DTP à des chaînes de réception hub d'une station au sol, 4 autres accès d'entrée à des chaînes de réception utilisateurs, en nombre de 40 dans le présent exemple, 4 accès de sortie du DTP à des chaînes d'émission hub d'une station terrestre et 4 autres accès de sortie à des chaînes d'émission utilisateurs, c'est-à-dire 40 spots différents. Dans cette configuration, une station terrestre ayant une capacité de 2000MHz à l'aller et 2000MHz au retour est connectée à 40 spots utilisateurs qui présentent chacun une capacité de 50MHz à l'aller et 50MHz au retour.

Il est aussi possible d'envisager de servir 80 spots utilisateurs différents avec une seule station terrestre, en utilisant un DTP à 12 accès d'entrée et 12 accès de sortie au DTP, 8 accès étant connectés à des chaînes de réception utilisateurs et 4 accès à des chaînes de réception hub.

Bien que l'invention ait été décrite en liaison avec des modes de réalisation particuliers, il est bien évident qu'elle n'y est nullement limitée et qu'elle comprend toutes les variantes et modifications définies par le cadre de l'invention selon les revendications annexées.

## Revendications

1. Système d'émission et de réception multi-spots à bord d'un satellite comportant au moins une section aller (45) comportant une chaîne de réception hub (70) destinée à recevoir des premiers signaux provenant d'une station terrestre et au moins deux chaînes d'émission utilisateurs (71, 72) destinées à émettre les premiers signaux vers des zones de couverture géographiques correspondant à des utilisateurs, appelés spots utilisateurs (14), au moins une section retour (47) comportant au moins deux chaînes de réception utilisateurs z(73, 74) destinées à recevoir des seconds signaux provenant des spots utilisateurs (14) et une chaîne d'émission hub (83) destinée à émettre les seconds signaux vers la station terrestre, et une section de liaison additionnelle, appelée section mesh (49), destinée à assurer des liaisons inter-spots, la section mesh comportant un processeur transparent numérique, DTP, (35) destiné à filtrer et router des signaux d'un premier spot utilisateur vers un second spot utilisateur, **caractérisé en ce que** la section mesh (49) comporte en outre :
- des moyens (52) de prélèvement et de recombinaison de fréquence comportant au moins deux entrées reliées à une section retour (47) et une sortie reliée à une entrée du DTP (35), pour prélever respectivement, sur les au moins deux chaînes de réception utilisateurs (73, 74), deux premières fractions de bandes de fréquence, appelées fractions de bande mesh (100) et pour recombiner les deux premières fractions de bande mesh (100) prélevées en une seule bande de fréquence appliquée sur une entrée du DTP (35),
- des moyens (53) de division et de réinjection de fréquence comportant une entrée reliée à une sortie du DTP (35) et au moins deux sorties reliées à une section aller, pour diviser la bande de fréquence routée sur une même sortie du DTP (35), en au moins deux secondes fractions de bande de fréquence et pour réinjecter, respectivement sur les au moins deux chaînes d'émission utilisateurs (71, 72), les secondes fractions de bande de fréquences obtenues après division.

2. Système d'émission et de réception multi-spots selon la revendication 1, **caractérisé en ce que** les moyens (52) de prélèvement et de recombinaison de fréquence comportent un multiplexeur d'entrée IMUX et **en ce que** les moyens (53) de division et de réinjection de fréquence comportent au moins un démultiplexeur de sortie DMUX.

3. Système d'émission et de réception multi-spots selon l'une des revendications 1 ou 2, **caractérisé en ce que** la fraction de bande mesh (100) prélevée sur une chaîne de réception utilisateur (73, 74) d'un spot utilisateur (14) est identique à la fraction de bande de fréquence réinjectée sur une chaîne de fréquence d'émission utilisateur (71, 72) du même spot utilisateur (14).

4. Système d'émission et de réception multi-spots selon la revendication 3, **caractérisé en ce que** les fractions de bande mesh (100) prélevées sur les chaînes de réception utilisateur d'une même section retour ont toutes une même largeur (L1) et sont décalées en fréquence les unes par rapport aux autres, le décalage en fréquence étant égal à la largeur (L1) d'une fraction de bande mesh (100) et les fractions de bande mesh prélevées sont contigües.

5. Système d'émission et de réception multi-spots selon la revendication 4, **caractérisé en ce que** la largeur totale des fractions de bande mesh (100) prélevées sur les chaînes de réception utilisateur (73, 74) de la même section retour (47) est égale à la largeur de bande (L2) de chaque spot utilisateur (14).

6. Système d'émission et de réception multi-spots selon l'une des revendications précédentes, **caractérisé en ce qu'**il comporte en outre des premiers moyens de sélectivité (60, 61) pour connecter sélectivement au moins un accès d'entrée du DTP (35) soit sur des chaînes de réception utilisateurs (73, 74), soit, par l'intermédiaire d'au moins une première liaison additionnelle (84), à une chaîne de réception hub (70), et **en ce qu'**il comporte des seconds moyens de sélectivité (62) pour connecter sélectivement au moins un accès de sortie du DTP (35) soit sur des chaînes d'émission utilisateurs (71, 72), soit, par l'intermédiaire d'au moins une seconde liaison additionnelle (85), sur une chaîne d'émission hub (83).

7. Système d'émission et de réception multi-spots selon la revendication 6, **caractérisé en ce que** les premiers moyens de sélectivité comportent une première matrice de sélectivité (60) d'entrée connectée dans la section mesh (49) entre les IMUX (52) et les entrées du DTP (35) et une deuxième matrice de sélectivité (61) de sortie connectée dans la section mesh (49) entre les sorties du DTP (35) et les DMUX (53).

8. Système d'émission et de réception multi-spots selon la revendication 7, **caractérisé en ce que** les deuxièmes moyens de sélectivité comportent une troisième matrice de sélectivité (62) connectée sur les chaînes de réception utilisateur (73, 74) de chaque section retour (47) et reliée à la deuxième matrice de sélectivité (61) de sortie de la section mesh (49).

9. Système d'émission et de réception multi-spots selon la revendication 8, **caractérisé en ce que** les première (60), deuxième (61) et troisième (62) matrices de sélectivité réalisent des fonctions de type « ou exclusif ».

10. Satellite de télécommunication comportant un système d'émission et de réception multi-spots selon l'une des revendications précédentes.

## Claims

1. A system on board a satellite for emitting and receiving multi-spots, comprising at least one outbound section (45) that comprises a reception hub channel (70) that is designed to receive first signals originating from a ground station and at least two user emission channels (71, 72) that are designed to emit the first signals towards geographical coverage zones that correspond to users, referred to as user spots (14), at least one return section (47) that comprises at least two user reception channels (73, 74) that are designed to receive second signals that originate from user spots (14) and an emission hub channel (83) that is designed to emit the second signals towards the ground station, and an additional connection section, referred to as mesh section (49), that is designed to provide inter-spot connections, the mesh section comprising a digital transparent processor (DTP) (35), that is designed to filter and route the signals of a first user spot towards a second user spot, **characterised in that** the mesh section (49) further comprises:
- means (52) for frequency sampling and recombining comprising at least two inputs connected to a return section (47) and one output connected to an input of the DTP (35), so as to respectively sample, on the at least two user reception channels (73, 74), two first fractions of frequency bands, referred to as mesh band fractions (100), and to recombine the two first sampled mesh band fractions (100) into a single frequency band applied to an input of the DTP (35),
- means (53) for frequency dividing and re-injecting comprising an input connected to an output of the DTP (35) and at least two outputs connected to an outbound section for dividing the frequency band routed to the same output of the DTP (35) into at least two second frequency band fractions and for re-injecting, respectively on the at least two user emission channels (71, 72), the second frequency band fractions that are obtained after dividing.

2. The system for emitting and receiving multi-spots according to claim 1, **characterised in that** the means (52) for frequency sampling and recombining comprise an input multiplexer IMUX and **in that** the means (53) for frequency dividing and re-injecting comprise at least one output demultiplexer DMUX.

3. The system for emitting and receiving multi-spots according to claim 1 or 2, **characterised in that** the mesh band fraction (100) that is sampled on a user reception channel (73, 74) of a user spot (14) is identical with the frequency band fraction that is reinjected on a user emission frequency channel (71, 72) of the same user spot (14).

4. The system for emitting and receiving multi-spots according to claim 3, **characterised in that** the mesh band fractions (100) that are sampled on the user reception channels of a same return section are all of the same length (L1) and are frequency shifted relative to each other, the frequency shift being equal to the width (L1) of a mesh band fraction (100) and the sampled mesh band fractions are contiguous.

5. The system for emitting and receiving multi-spots according to claim 4, **characterised in that** the total width of the mesh band fractions (100) that are sampled on the user reception channels (73, 74) of the same return section (47) is equal to the bandwidth (L2) of each user spot (14).

6. The system for emitting and receiving multi-spots according to any one of the preceding claims, **characterised in that** it further comprises first selectivity means (60, 61) for selectively connecting at least one input terminal of the DTP (35) either to the user reception channels (73, 74) or, by means of at least one additional connection (84), to a reception hub channel (70), and **in that** it comprises second selectivity means (62) for selectively connecting at least one output terminal of the DTP (35) either to the user emission channels (71, 72) or, by means of at least one second additional connection (85), to an emission hub channel (83).

7. The system for emitting and receiving multi-spots according to claim 6, **characterised in that** the first selectivity means comprise a first input selectivity matrix (60) connected in the mesh section (49) between the IMUX (52) and the inputs of the DTP (35) and a second output selectivity matrix (61) connected in the mesh section (49) between the output of the DTP (35) and the DMUXs (53).

8. The system for emitting and receiving multi-spots according to claim 7, **characterised in that** the second selectivity means comprise a third selectivity matrix (62) connected to the user reception channels (73, 74) of each return section (47) and connected to the second output selectivity matrix (61) of the mesh section (49).

9. The system for emitting and receiving multi-spots according to claim 8, **characterised in that** the first (60), second (61) and third (62) selectivity matrices fulfil functions of the "exclusive or" type.

10. A telecommunication satellite comprising a system for emitting and receiving multi-spots according to any one of the preceding claims.

## Patentansprüche

1. System an Bord eines Satelliten zum Senden und Empfangen von Multipunkten, das Folgendes umfasst: wenigstens einen Ausgangsteil (45), der eine Empfangs-Hub-Kette (70) zum Empfangen von von einer Bodenstation kommenden ersten Signalen und wenigstens zwei Benutzersendeketten (71, 72) zum Senden der ersten Signale zu Benutzern entsprechenden geografischen Erfassungszonen, Benutzerpunkte (14) genannt, beinhaltet, wenigstens einen Rückkehrteil (47) mit wenigstens zwei Benutzerempfangsketten (73, 74) zum Empfangen von von Benutzerpunkten (14) kommenden zweiten Signalen und eine Sende-Hub-Kette (83) zum Senden der zweiten Signale zur Bodenstation, und einen zusätzlichen Verbindungsteil, Mesh-Teil (49) genannt, zum Bereitstellen von Zwischenpunktverbindungen, wobei der Mesh-Teil einen digitalen transparenten Prozessor (DTP) (35) zum Filtern und Leiten der Signale eines ersten Benutzerpunkts zu einem zweiten Benutzerpunkt umfasst, **dadurch gekennzeichnet, dass** der Mesh-Teil (49) ferner Folgendes umfasst:
- Mittel (52) zum Abtasten und Rekombinieren von Frequenzen, umfassend wenigstens zwei Eingänge, die mit einem Rückkehrteil (47) verbunden sind, und einen Ausgang, der mit einem Eingang des DTP (35) verbunden ist, um jeweils auf den wenigstens zwei Benutzerempfangsketten (73, 74) zwei erste Frequenzbandfraktionen abzutasten, Mesh-Bandfraktionen (100) genannt, und die beiden abgetasteten Mesh-Bandfraktionen (100) zu einem an einen Eingang des DTP (35) angelegten einzigen Frequenzband zu rekombinieren,
- Mittel (53) zum Unterteilen und erneuten Injizieren von Frequenzen, umfassend einen mit einem Ausgang des DTP (35) verbundenen Eingang und wenigstens zwei mit einem Ausgangsteil verbundene Ausgänge zum Unterteilen des zum selben Ausgang des DTP (35) geleiteten Frequenzbands in wenigstens zwei zweite Frequenzbandfraktionen und zum Neuinjizieren, jeweils auf den wenigstens zwei Benutzersendeketten (71, 72), der nach der Unterteilung erhaltenen zweiten Frequenzbandfraktionen.

2. System zum Senden und Empfangen von Mehrfachpunkten nach Anspruch 1, **dadurch gekennzeichnet, dass** die Mittel (52) zum Abtasten und Rekombinieren von Frequenzen einen Eingangsmultiplexer IMUX umfassen, und dadurch, dass die Mittel (53) zum Unterteilen und Neuinjizieren von Frequenzen wenigstens einen Ausgangsdemultiplexer DMUX umfassen.

3. System zum Senden und Empfangen von Mehrfachpunkten nach Anspruch 1 oder 2, **dadurch gekennzeichnet, dass** die auf einer Benutzerempfangskette (73, 74) eines Benutzerpunkts (14) abgetastete Mesh-Bandfraktion (100) mit der Frequenzbandfraktion identisch ist, die auf einer Benutzersendefrequenzkette (71, 72) desselben Benutzerpunkts (14) neu injiziert wird.

4. System zum Senden und Empfangen von Mehrfachpunkten nach Anspruch 3, **dadurch gekennzeichnet, dass** die auf den Benutzerempfangsketten eines selben Rückkehrteils abgetasteten Mesh-Bandfraktionen (100) alle von derselben Länge (L1) und relativ zueinander frequenzverschoben sind, wobei die Frequenzverschiebung gleich der Breite (L1) einer Mesh-Bandfraktion (100) ist und die abgetasteten Mesh-Bandfraktionen nebeneinander liegen.

5. System zum Senden und Empfangen von Mehrfachpunkten nach Anspruch 4, **dadurch gekennzeichnet, dass** die Gesamtbreite der auf den Benutzerempfangsketten (73, 74) desselben Rückkehrteils (47) abgetasteten Mesh-Bandfraktionen (100) gleich der Bandbreite (L2) jedes Benutzerpunkts (14) ist.

6. System zum Senden und Empfangen von Mehrfachpunkten nach einem der vorherigen Ansprüche, **dadurch gekennzeichnet, dass** es ferner erste Selektivitätsmittel (60, 61) zum selektiven Verbinden von wenigstens einem Eingangsanschluss des DTP (35) entweder mit den Benutzerempfangsketten (73, 74) oder, über wenigstens eine zusätzliche Verbindung (84), mit einer Empfangs-Hub-Kette (70) umfasst, und dadurch, dass es zweite Selektivitätsmittel (62) zum selektiven Verbinden von wenigstens einem Ausgangsanschluss des DTP (35) entweder mit den Benutzersendeketten (71, 72) oder, über wenigstens eine zweite zusätzliche Verbindung (85), mit einer Sende-Hub-Kette (83) umfasst.

7. System zum Senden und Empfangen von Mehrfachpunkten nach Anspruch 6, **dadurch gekennzeichnet, dass** die ersten Selektivitätsmittel eine im Mesh-Teil (49) zwischen dem IMUX (52) und den Eingängen des DTP (35) geschaltete erste Eingangsselektivitätsmatrix (60) und eine im Mesh-Teil (49) zwischen dem Ausgang des DTP (35) und den DMUXs (53) geschaltete zweite Ausgangsselektivitätsmatrix (61) umfasst.

8. System zum Senden und Empfangen von Mehrfachpunkten nach Anspruch 7, **dadurch gekennzeichnet, dass** die zweiten Selektivitätsmittel eine dritte Selektivitätsmatrix (62) umfassen, die mit den Benutzerempfangsketten (73, 74) jedes Rückkehrteils (47) geschaltet und mit der zweiten Ausgangsselektivitätsmatrix (61) des Gitterteils (49) verbunden ist.

9. System zum Senden und Empfangen von Mehrfachpunkten nach Anspruch 8, **dadurch gekennzeichnet, dass** die erste (60), die zweite (61) und die dritte (62) Selektivitätsmatrix Funktionen des "Exklusiv-oder"-Typs erfüllen.

10. Telekommunikationssatelliten, die ein System zum Senden und Empfangen von Multispots nach einem der vorherigen Ansprüche umfassen.
